(19) Europäisches Patentamt
European Patent Office
Office européen des brevets

(11) **EP 4 295 949 A1**

(12) **EUROPEAN PATENT APPLICATION**

(43) Date of publication:
**27.12.2023   Bulletin 2023/52**

(21) Application number: **23166379.0**

(22) Date of filing: **19.11.2020**

(51) International Patent Classification (IPC):
**B01L 3/00** (2006.01)      **B01D 63/08** (2006.01)

(52) Cooperative Patent Classification (CPC):
**B01D 63/087; B01D 63/005; B01D 63/088;
B01D 69/10; B01D 69/12; B01L 3/502;**
B01D 2313/24; B01D 2313/28; B01D 2315/08;
B01L 3/502753; B01L 2300/0645; B01L 2300/0681;
B01L 2300/087; B01L 2400/0487; B01L 2400/049

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2019   US 201962937318 P**

(62) Document number(s) of the earlier application(s) in
accordance with Art. 76 EPC:
**20889345.3 / 4 061 511**

(71) Applicant: **University of Cincinnati
Cincinnati, OH 45206 (US)**

(72) Inventors:
• **HEIKENFELD, Jason C
Cincinnati, 45202 (US)**

• **DREXELIUS, Amy
Covington, 41011 (US)**

(74) Representative: **Findlay, Alice Rosemary
Reddie & Grose LLP
The White Chapel Building
10 Whitechapel High Street
London E1 8QS (GB)**

Remarks:
•This application was filed on 03.04.2023 as a
divisional application to the application mentioned
under INID code 62.
•Claims filed after the date of filing of the application
(Rule 68(4) EPC).

(54) **DEVICES AND METHODS FOR CONCENTRATION OF ANALYTES**

(57)      A device and method for increasing the concentration of an analyte in a fluid sample. The device may include: (1) a housing defining a chamber therein for receiving a fluid sample, (2) a membrane associated with the housing; and (3) a pressure generator operatively connected to the housing to create a pressure gradient across the membrane such that pressure on a first side of said membrane is greater than pressure on a second side of said membrane. The fluid sample includes a fluid and any analyte therein (though there may be other components present in the fluid sample other than only fluid and analyte). When the pressure generator is operated to create the pressure gradient, this causes at least a portion of the fluid sample to move across the membrane. As a result, the fluid of the fluid sample is separated into a first portion of fluid on one side of the membrane, and a second portion of fluid including said analyte on an opposite side of the membrane. This second portion of fluid - by having the analyte (or a substantial amount of the analyte) present in an amount of fluid that is reduced as compared to the fluid sample prior to the application of pressure - is thus the resulting analyte-concentrated fluid sample.

FIG. 1

**Description**

CROSS-REFERENCE TO RELATED APPLICATION

This application claims the benefit of the filing date of U.S. Patent Application Serial No. 62/937,318, filed on November 19, 2019, the disclosure of which is incorporated by reference herein in its entirety.

FIELD OF THE INVENTION

The present invention relates to a method of concentrating analytes in a fluid, and devices for same.

BACKGROUND OF THE INVENTION

This section is intended to introduce the reader to various aspects of art that may be related to various aspects of the present invention, which are described and/or claimed below. This discussion is believed to be helpful in providing the reader with background information to facilitate a better understanding of various aspects of the present invention. Accordingly, it should be understood that these statements are to be read in this light, and not as admissions of prior art.
Point-of-Care (POC) devices such as Lateral Flow Assays (LFAs) are used for quick yes-or-no analysis for various infections and toxins. However, many of these assays do not have sensitivities high enough to detect extremely small concentrations of analyte. By concentrating a fluid sample (e.g., water, saliva, urine, interstitial fluid, sweat) prior to testing, it is possible to attain a concentration of analyte which the assay can detect. This concentration step (which may be referred to as "preconcentration" when it occurs as a step prior to subsequent steps with the concentrated sample - e.g., binding, detection, quantification, reporting, etc.) can be accomplished by moving the fluid through a membrane which has pores smaller than the analyte of interest. In this manner, smaller molecules (along with fluid) pass through the pores into a waste reservoir on a second side of the membrane, while the analyte of interest is trapped on the original, first side of the membrane. However, current preconcentration devices are relatively slow, limiting their usefulness. Therefore, a need still exists for a device that provides rapid preconcentration of analytes.

SUMMARY OF THE INVENTION

Certain exemplary aspects of the invention are set forth below. It should be understood that these aspects are presented merely to provide the reader with a brief summary of certain forms the invention might take and that these aspects are not intended to limit the scope of the invention. Indeed, the invention may encompass a variety of aspects that may not be explicitly set forth below.
One aspect of the present invention is directed to a device for increasing the concentration of an analyte in a fluid sample. In this aspect, the device may include: (1) a housing for receiving a fluid sample, (2) a membrane associated with the housing; and (3) a pressure generator operatively connected to the housing to create a pressure gradient across the membrane. When the pressure generator creates the pressure gradient, at least a portion of the fluid sample moves across the membrane while the membrane separates analyte. As a result, a reduced portion of fluid will include the analyte (or a substantial amount of the analyte), thus resulting in an analyte-concentrated fluid sample.
The device may also include more than one membrane. This may allow for further concentration of analyte, or for the separation and concentration of multiple analytes. Here, the device may include (1) a housing for receiving a fluid sample, (2) a first membrane and a second membrane associated with the housing, and (3) a pressure generator operatively connected to the housing to create a pressure gradient across the first membrane and the second membrane.
Another aspect of the present invention is directed to a method of increasing the concentration of an analyte within a fluid sample. Such a method may include applying a pressure to a fluid sample comprising a fluid including an analyte therein. Applying the pressure causes a separation of the fluid into a first portion of fluid and a second portion of fluid, the second portion of fluid including the analyte. Thus, the second portion of fluid is an analyte-concentrated fluid sample.
By these and other aspects, the present invention overcomes the drawbacks described in the Background by providing devices and methods that are able to quickly and reliably provide an analyte-concentrated fluid sample. These and other advantages of the application will be apparent to those of skill in the art with reference to the drawings and the detailed description below.

BRIEF DESCRIPTION OF THE DRAWINGS

The accompanying drawings, which are incorporated in and constitute a part of this specification, illustrate embodiments of the invention and, together with the general description of the invention given above and the detailed description of the embodiments given below, serve to explain the principles of the present invention.

FIG. 1 is an illustration of one embodiment of a device in accordance with principles of the present invention.

FIGS. 2A and 2B are illustrations of the concept of using a membrane to filter out smaller solutes and concentrate an analyte.

FIG. 3 is an illustration of another embodiment of a device in accordance with principles of the present invention.

FIGS. 4A-4D show an embodiment of a partially occluded membrane in accordance with principles of the present invention.

FIG. 5 is an illustration of an example of a point of care device including preconcentration of an analyte in accordance with principles of the present invention.

FIG. 6 is an illustration of another embodiment of a device in accordance with principles of the present invention.

FIG. 7 is a graph showing membranes with various pore sizes to allow for selection based on the analyte of interest.

FIG. 8 is a graph of the data presented in Table 1 (below) for PBS Flux Data showing pressure versus flow rate for PBS through a 5kDa PES membrane.

FIG. 9 is a graph of the data presented in Table 2 (below) for Saliva Flux Data for a first 5mL saliva test showing volume of saliva over time at 90psi.

FIG. 10 is a graph of the data presented in Table 3 (below) for Saliva Flux Data for a 10mL saliva test showing volume of saliva over time.

FIG. 11 is a graph of the data presented in Table 4 (below) for Saliva Flux Data for a second 5mL saliva test showing volume of saliva over time.

FIG. 12 is depicts test strip data used to generate an LFA calibration curve and concentration test data for urine.

FIG. 13 is a graph of the data presented in Table 6 (below) for Urine Flux Data showing flux (mL/min) of urine versus pressure.

## DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As described above, many POC devices (such as LFAs) do not have sensitivities high enough to detect extremely small concentrations of analyte, and current preconcentration devices are relatively slow, limiting their usefulness. With that background in mind, various aspects and embodiments of the present invention are directed to devices that can be used to concentrate an analyte present in a fluid sample (which may be referred to herein as a "preconcentration devices" or "preconcentration systems"). Further, various aspects of the present invention provide preconcentration systems that are able to quickly and reliably provide a volume of preconcentrated sample.

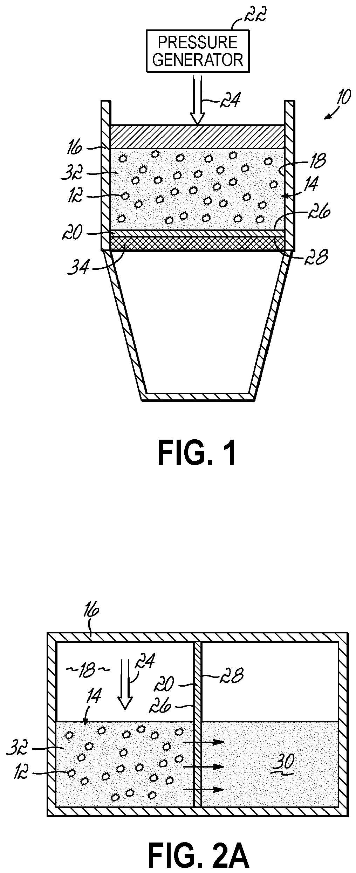

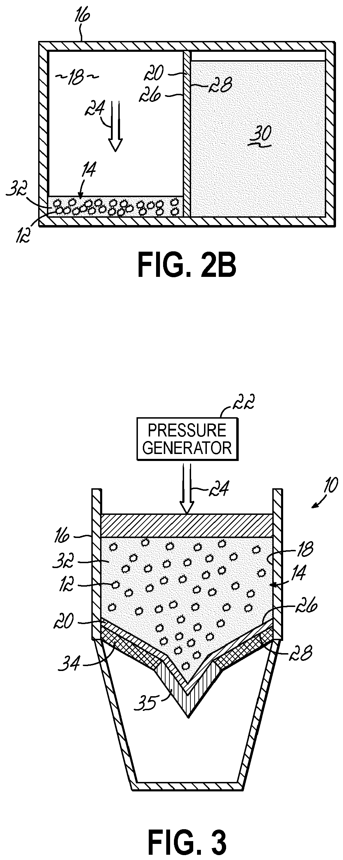

In that regard, and referring to FIGS. 1, 2A, and 2B, one aspect of the present invention is directed to a device 10 for increasing the concentration of an analyte 12 in a fluid sample 14 (with FIG. 1 being a representation of one embodiment of a device, and FIGS. 2A and 2B being schematics demonstrating the principles of the present invention). In this aspect, the device 10 may include: (1) a housing 16 defining a chamber 18 therein for receiving a fluid sample 14, (2) a membrane 20 associated with the housing 16; and (3) a pressure generator 22 operatively connected to the housing 16 to apply pressure 24 to the chamber 18, thereby create a pressure gradient across the membrane 20 such that pressure on a first side 26 of the membrane 20 is greater than pressure on a second side 28 of the membrane 20. The fluid sample 14 (e.g., water, saliva, urine, interstitial fluid, blood, serum, sweat, or other fluids) includes a fluid and any analyte 12 therein (though there may be other components present in the fluid sample 14 other than only fluid and analyte 12). When the pressure generator 22 is operated to create the pressure gradient, this causes at least a portion of the fluid sample 14 to move across the membrane 20 (FIG. 1 depicts the device 10 with pressure just beginning to be applied, and before any fluid has crossed the membrane; FIGS. 2A and 2B show the movement of fluid across membrane). As a result, the fluid of the fluid sample 14 is separated into a first portion 30 of fluid on one side of the membrane 20, and a second portion 32 of fluid including the analyte 12 on an opposite side of the membrane 20. This second portion 32 of fluid - by having the analyte 12 (or a substantial amount of the analyte 12) present in an amount of fluid that is reduced as compared to the fluid sample 14 prior to the application of pressure - is thus the resulting analyte-concentrated fluid sample.

As opposed to the slow and unreliable devices or systems of the prior art, the present inventors have found that the concentration process can be accomplished rapidly by applying a pressure - such as a large positive pressure - to the fluid sample. As described, the pressure generator 22 is operatively connected to the housing 16, such that it is adapted to exert a pressure 24 within the chamber 18. This application of pressure 24 will be applied to any fluid sample present in the chamber 18. In one embodiment, the pressure that is applied may be a positive pressure. In an alternate embodiment, a negative pressure may be used.

Further, various devices may be used as the pressure generator of the present invention. As non-limiting examples, the pressure generator may be a pump, a syringe, a gas canister, a gas tank, a mechanical lever, or other suitable device. Pressure generators could also be, for example, chemical in nature - for example a chemical pack such as a burstable blister pack containing an acid and sodium-bicarbonate, that when reacting rapidly creates a gas pressure.

The pressure 24 generated within the chamber 18, and on the fluid sample 14, forces the fluid sample 14 against the membrane 20. Small molecules and a portion of fluid (the first portion 30) are forced across the membrane 20, and the remaining concentrated fluid sample (the second portion 32 of fluid) that will be used for testing remains in the original sample reservoir. The concentrated fluid sample may subsequently be used for sensing by one or more sensors or may be stored.

The device has been described herein as including a housing having a membrane associated therewith. It should be recognized by those of ordinary skill in the art that this description may refer to an embodiment where a membrane is placed within the chamber of the housing (that would divide the chamber into separate regions - such that fluid may move from one region of the chamber in the housing across the membrane to another region of the chamber in the housing) - or it may also refer to embodiments where a membrane is positioned proximal to, or at, a portion or wall of the housing such that, upon the application of pressure, fluid may move from the chamber of the housing across the membrane to an area outside the chamber and the housing (such as into a different second housing, or removable receptacle). As an example of this second type of embodiment, the first portion of fluid may cross the membrane and into a separate waste cup - so that it may be discarded. The chamber defined by the housing may also be a flow path for fluid sample within a device (such as a point of care device).

As described above, the pressure generator is used to apply pressure within the chamber and to any fluid sample present in the chamber. The effect of the pressure on the fluid sample is to promote the flow of at least a portion of fluid across the membrane. In certain embodiments, the pressure applied is a positive pressure and the pressure generator is capable of generating a positive pressure within the chamber and on the fluid sample of at least 20psi, or at least 30psi, or at least 50psi, or at least 90psi, or at least 100psi, or at least 500psi.

Additionally, in certain embodiments, the device may incorporate a seal between the pressure generator and the location of the fluid sample. Non-limiting examples of useful seal materials include O-rings, rubber stoppers, petroleum jelly, and/or adhesive. (For example, the structure located just under pressure arrow 24 in FIG. 1 could represent such a seal, or a closure to device.)

As pressure 24 is applied, a pressure gradient is created across the membrane 20, such that fluid of the fluid sample 14 begins to move across the membrane 20. In certain embodiments, the membrane 20 is configured to prevent passage of the analyte 12 through and across the membrane 20. And so, embodiments of the present invention may utilize a semipermeable membrane that is impermeable to the analyte or analytes of interest but permeable to other components of the sample fluid. One manner in which passage of the analyte 12 may be prevented is due to size exclusion. For example, in one embodiment, the device may include a membrane 20 that comprises pores having a pore size that is smaller than the size of the analyte 12. In such an embodiment, as pressure 24 is applied, fluid from the fluid sample 14 will be able to move across the membrane 20. However, analyte 12 will be prevented from moving across the membrane 20. As a result, the application of pressure 24 will result in separation of the fluid sample 14 into a first portion 30 of fluid on one side of the membrane 20 (i.e., the side of the membrane 20 that a portion of fluid without analyte - or substantially without analyte - passes to), and a second portion 32 of fluid including the analyte 12 on an opposite side of the membrane 20 (that "opposite" side of the membrane 20 being the side where the fluid sample 14 was located prior to the application of pressure 24).

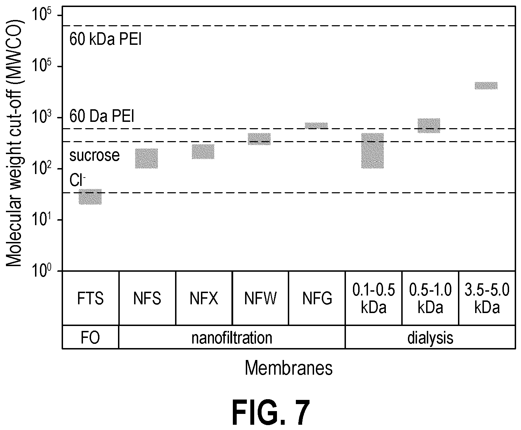

As an example, when the pore size of the membrane used in the present invention is selected based on the size of the analyte to be concentrated, the pore size may be based on the molecular weight of the analyte (e.g., 200 kilodaltons). FIG. 7 shows membranes with various pore sizes and how the membrane may be selected based on the analyte of interest.

When considering a membrane that separates analyte based on size exclusion and pore size (as discussed above), those of ordinary skill in the art should recognize that a particular analyte of interest may not include all particles of an exact or uniform size. As such, the pore size of a membrane may be sized to prevent a substantial portion of analyte across the membrane. For example, the pores may prevent passage, of all analyte, or at least 99% of analyte, or at least 95% of analyte, or at least 90% of analyte, etc. In other words, the membrane should prevent passage of a percentage of analyte that will be sufficient to result in effective concentration of analyte for subsequent use. Additionally, those of ordinary skill in the art will recognize that size exclusion may not be the only type of membrane that can be used to separate fluid and concentrate analyte. For example, charge may be used as another method by which to block certain molecules from passing through the membrane - as well as other possible methods.

In one embodiment of the present invention, the pressure applied to the sample fluid at the membrane is at least about 20 psi. In another embodiment, the pressure applied to the sample fluid at the membrane is at least about 30 psi. In yet another embodiment, the pressure applied to the sample fluid at the membrane is at least about 50 psi. In yet another embodiment, the pressure applied to the sample fluid at the membrane is at least about 90 psi. In yet another embodiment, the pressure applied to the sample fluid at the membrane is at least about 100 psi. In yet another embodiment, the pressure applied to the sample fluid at the membrane is at least about 500 psi.

In an embodiment of the present invention, the pressure applied to the sample fluid at the membrane is less than about 700 psi. In another embodiment, the pressure applied to the sample fluid at the membrane is less about 500 psi. In yet another embodiment, the pressure applied to the sample fluid at the membrane is less than about 300 psi.

Due to the use of such pressures, the concentration of analyte can be accomplished in a short time period. In one embodiment, the concentration of analyte is completed in less than 10 minutes. In another embodiment, the concentration of analyte is completed in less than 5 minutes. In yet another embodiment, the concentration of analyte is completed in less than 1 minute. In another embodiment, the concentration of analyte is completed in less than 30 seconds.

In certain embodiments, and at certain pressures, there may be a risk of deformation of the membrane of the device 10. And so, the device 10 may also include a backing material 34 positioned proximal to the membrane to support the membrane. The backing material 34 may be any material that can resist the pressures used to preconcentrate the analytes in the sample fluid. Non-limiting examples of useful backing materials include steel mesh, nylon mesh, and a metal plate. The backing material should permit fluid to flow through it, and this may be accomplished (in a non-limiting way) through holes, apertures, gaps, or a porous nature of the backing material. The backing material 34 may be disposable and integrated with the membrane 20 or may be permanent or reusable.

Further, in certain embodiments, the membrane 20 and backing material 34 are of a non-planar shape. Non-limiting examples of useful non-planar shapes include fully or partially conical and triangular shapes. Such shapes may aid in removal of the concentrated analyte. For instance, a conical shape may facilitate the use of a pipette to remove concentrated analyte held at the bottom of the cone by gravity.

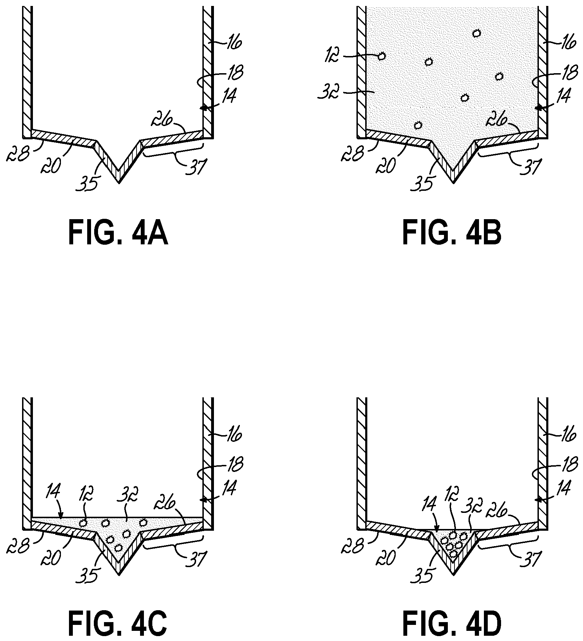

Referring now to FIGS. 3 and 4A-4D, a device is shown that could rapidly attain concentration of an analyte in a particular desired volume of fluid - or at a particular desired concentration. In doing so, this embodiment would not require any feedback control, etc. As in previous embodiments, and referring now particularly to FIG. 3, the device 10 of this embodiment may include: (1) a housing 16 defining a chamber 18 therein for receiving a fluid sample 14, (2) a membrane 20 associated with the housing 16; and (3) a pressure generator 22 operatively connected to the housing 16 to apply pressure 24 to the chamber 18, thereby create a pressure gradient across the membrane 20 such that pressure on a first side 26 of the membrane 20 is greater than pressure on a second side 28 of the membrane 20. In this embodiment, the membrane includes a non-planar shape, with a portion of the membrane 20 - in the illustrated embodiment the middle of the membrane - including a conical or triangular shape (though this embodiment would not be limited to these particular shapes). The portion of the membrane including this cone or triangle of the membrane would include at least one occluding material 35. The occluding material could be a plastic film, or wax melted into the membrane, or some other suitable material. In use, and referring to FIGS. 3 and 4A-4D, when the pressure generator 22 is operated to create the pressure gradient, this causes at least a portion of the fluid sample 14 to move across the membrane 20 (though this would only occur at areas of the membrane that are not occluded). As a result, the fluid of the fluid sample 14 is separated into a first portion 30 of fluid on one side of the membrane 20, and a second portion 32 of fluid including the analyte 12 on an opposite side of the membrane 20 (like that shown in FIG. 2B; FIG. 3, like FIG. 1, shows the device with pressure just beginning to be applied, and before any fluid has crossed the membrane; FIGS. 4A-4D do not show the portion of fluid that has passed through the membrane - rather, FIGS. 4B-4D show the effect on fluid in the chamber 18 as a portion of fluid passes through the membrane). The non-occluded portion of the membrane (in the illustrated embodiment) also includes a slope 37 that moves remaining fluid toward the center (i.e., toward the occluded portion of the membrane) as fluid is driven across the membrane. And, the device would keep concentrating until the fluid settled into this occluded part of the membrane - i.e., the cone or triangle in the illustrated embodiment - where no more pressure could drive fluid through because the membrane is blocked at that location (see FIG. 4D). That occluded portion of the membrane could be designed to hold a particular set volume of fluid. During operation, the rest of the device will still hold pressure because the membrane is wet. And the end result is this device (and its manner of operation) provides a way to obtain a desired amount of end sample volume or a desired amount of preconcentration. In an embodiment of the present invention, the non-occluded portion of the membrane remains in contact with the sample fluid until the sample fluid reaches at least less than 20% of its initial volume for the sample fluid.

As an additional example of such an embodiment, consider a dual-sloped conical membrane that holds 3 mL of sample, with a wax coated bottom of the cone with a capacity of 100 $\mu$L. The dual sloping allows the sample fluid to maintain maximum contact with as much membrane area as possible right up until the final point where concentration is nearly complete. For example, the first slope may be 2, 5, 10, or 20 degrees whereas the second slope could be >45 degrees. Next, assume near room temperature a manual valve is opened and a pressure generator of a $CO_2$ cartridge

provides ~800 psi liquid $CO_2$ pressure which is equivalent to 5.5E6 $N/m^2$. Next, a 5 kDa membrane is used which is fully wetted by the sample fluid such that there are no leak points for fluid in the membrane. The membrane has ~2 nm average diameter pores, which according to Laplace pressure and the surface tension of a sample fluid such as blood or serum with ~50 $mN/m^2$, the membranes will stay wetted with fluid as up to an applied pressure of 2 * 50E-3 N/m2 / 1E-9 m = 1E8$N/m^2$ which is 20X higher than the $CO_2$ pressure. As a result, the membrane will retain the applied gas pressure. This example teaches that the present invention includes at least one membrane that can retain >100 psi when the membrane is wetted by the sample fluid. This example also teaches that the present invention may concentrate a 5 mL sample such as urine as quickly as if using a 5 $cm^2$ membrane.

One difference between the embodiment of FIG. 3 and the embodiments for FIGS. 4A-4D is that FIG. 3 shows occluded material as part of the backing material 34 adjacent the membrane 20 (which would prevent fluid that passes into the membrane adjacent occluded portion of backing material from proceeding any farther), whereas FIGS. 4A-4D show occluded material as being a portion of membrane 20. In FIG. 3, membrane may be removable, and thus membrane 20 can be removed after use and replaced with a new membrane that contours to (or can be made to contour to) backing material 34. This prevents one from needing to have membranes with occluded portions already formed in membrane that need to be aligned with backing material.

Embodiments allow for the analyte or analytes of interest to be preconcentrated to a defined amount. In an embodiment, the devices of the present invention are able to provide preconcentration greater than at least one of 2X, 5X, 10X, 30X, 50X, or 100X. In an embodiment, the devices are able to provide salt concentrations in the preconcentrated sample changed by less than at least one of 10X, 5X, 2X, 0.5X, 0.25X, 0.1X, or 0.05X. In an embodiment, the devices are able to provide pH in the preconcentrated sample changed by less than at least one of 1000X, 100X, 10X, 2X, or 0.5X (e.g. in terms of linear concentration, not the log scale of pH). Due to the high pressures which are used in this device, preconcentration can occur extremely quickly, even when using biofluids. For example, one can concentrate 5 mL of urine 50x to 100 μL in <5 minutes if using a 5 $cm^2$ membrane and 100 psi. This indicates that at 500 psi, the concentration process would occur in <1 minute. If using prefiltered saliva (filtered of large mucins), one can concentrate a 3 mL sample 30X to 100 μL in 14 minutes using 90 psi. This indicates that the 3 mL sample could be concentrated in <3 minutes if the concentration is taking place using 500 psi.

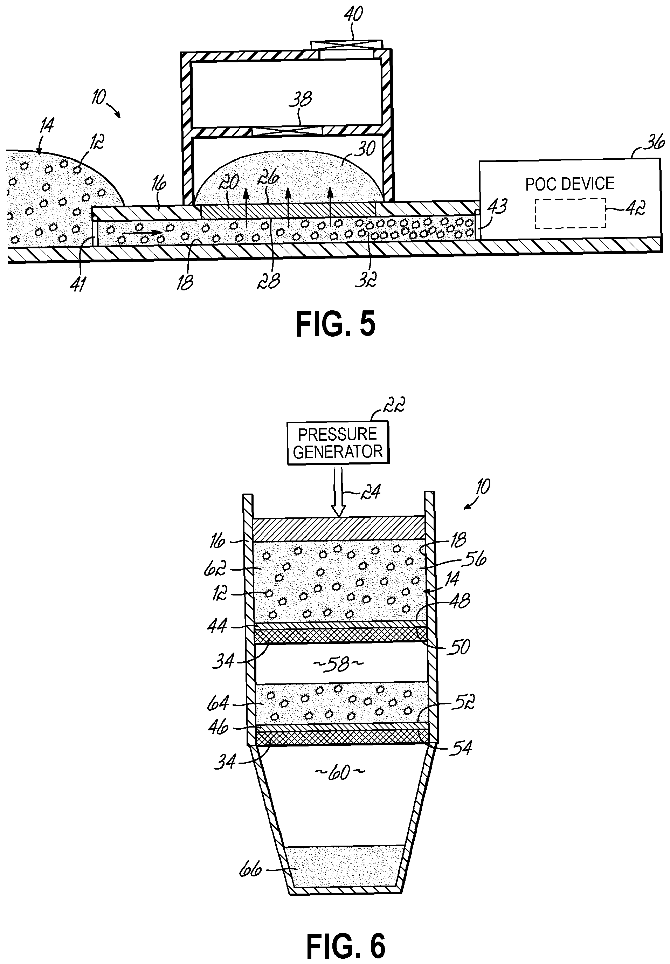

Various embodiments may also include one or more gating components - for example, at the inlet to the device and, optionally, at the outlet of the device. And so, in one embodiment (an illustrated example of which is shown in FIG. 5), the device may include a first gating component 41 positioned proximal to a first end of the housing 16. The first gating component has an open position and a closed position, and the first gating component prevents fluid from entering the chamber of the housing while in the closed position.

Additionally, in certain embodiments, the device may include a second gating component 43 positioned proximal to a second end of the housing 16. The second gating component has an open position and a closed position, and the second gating component prevents fluid from exiting the chamber of the housing while in the closed position.

One use of such gating components is - with respect to the first gating component - to reduce or prevent ingress of further fluid containing analyte into the chamber of the device while a first amount of fluid sample is being concentrated. This can prevent the mixing of a first sample with a subsequent sample. Similarly, the second gating component may prevent egress of an amount of fluid - for example, to a POC device - until the fluid sample is sufficiently concentrated.

As described above, preconcentration devices (such as those described herein that quickly and reliably provide a volume of preconcentrated sample) may be integrated with sensing technologies, such as lateral flow assays. An example of a preconcentration device that is associated with (or a part of) a POC device, such as an LFA, is shown in FIG. 5.

Referring to FIG. 5, a preconcentration device 10 is shown in conjunction with a POC device 36. The preconcentration device 10 includes a housing 16 defining a chamber 18 therein (shown as a flow path) for receiving a fluid sample 14, and which the fluid sample 14 may flow along/through, and a membrane 20 associated with the housing 16. As the fluid sample 14 flows within the chamber 18, a pressure is applied via a pressure generator 22 operatively connected to the system. The application of pressure creates a pressure gradient across the membrane 20 such that pressure on a first side 26 of the membrane 20 is greater than pressure on a second side 28 of the membrane 20. As can be seen in FIG. 5, this causes at least a portion of the fluid sample 14 to move across the membrane 20. As a result, the fluid of the fluid sample 14 is separated into a first portion 30 of fluid on one side of the membrane 20, and a second portion 32 of fluid including the analyte 12 on an opposite side of the membrane 20 (in FIG. 5 remaining in, and continuing down, the flow path of the chamber 18). This second portion 32 of fluid - by having the analyte 12 (or a substantial amount of the analyte 12) present in an amount of fluid that is reduced as compared to the fluid sample 14 prior to the application of pressure - is thus an analyte-concentrated fluid sample. The device 10 may further include a vent membrane 38 and a check valve 40.

Although, as described above, a pressure generator 22 may be used in the device 10 of FIG. 5, alternatively a vacuum may be used to generate the pressure to move fluid across the membrane 20. In such an embodiment, the space located directly above the membrane 20 in FIG. 5 may be a vacuum chamber. As fluid sample 14 moves past, fluid is pulled across the membrane 20, but analyte 12 is prevented from crossing membrane 20 (e.g., due to size exclusion), and analyte-concentrated fluid remains to enter POC device 36.

As can be further seen in FIG. 5, the preconcentration device 10 is associated with a POC device 36. Once concentrated, the analyte-concentrated may enter the POC device 36. And, that POC device 36 includes at least one sensor 42 to detect the analyte 12, or measure the analyte 12, or detect a characteristic of the analyte 12, or measure a characteristic of the analyte 12.

Certain embodiments, such as that depicted in FIG. 5, only shows a sensor 42 schematically as a simple individual element. However, it will be understood, by those of ordinary skill in the art, that many sensors require two or more electrodes, reference electrodes, or additional supporting technology or features which are not specifically disclosed in the description herein. Sensors measure a characteristic of an analyte. Sensors are preferably electrical in nature, but may also include optical, chemical, mechanical, or other known biosensing mechanisms. Sensors can be in duplicate, triplicate, or more, to provide improved data and readings. Sensors may provide continuous or discrete data and/or readings. Sensors may also include lateral flow assays such as an influenza test or pregnancy test, or DNA amplification techniques such as molecular diagnostics. Certain embodiments of the disclosed invention may further include sub-components of what would be sensing devices with more sub components needed for use of the device in various applications, which are known (e.g., a battery, antenna, adhesive), and for purposes of brevity and focus on inventive aspects, such components may not be explicitly shown in the Figures or described in the various embodiments of the present invention.

And so, in certain embodiments, the preconcentration device 10 may include a sensor 42 adapted to detect the analyte 12, or measure the analyte 12, or detect a characteristic of the analyte 12, or measure a characteristic of the analyte 12. As used herein, the concept that the preconcentration device "may include a sensor" can also refer to a configuration where the preconcentration device is attached to, or is adaptable to be operatively connected to a device including a sensor. In all these embodiments incorporating a sensor, the analyte-concentrated fluid sample is in communication with the sensor - or may be brought into communication with the sensor.

The device 10 may also include more than one membrane. This may allow for further concentration of analyte 12, or for the separation and concentration of multiple analytes. In a non-limiting example, a fluid sample 14 may pass through a first membrane 44 having a larger pore size and the fluid sample 14 then passes through a second membrane 46 with a smaller pore size. This design has several advantages, including the removal of small molecules and solutes from the sample being concentrated to avoid large changes in salinity or pH. This design also allows for the concentration and collection of multiple analytes. Alternatively, the design may be used to produce a purer sample of concentrated analyte on the second membrane. This design also helps to minimize flux decreases from fouling, since smaller analytes will be able to pass through the first membrane rather than cake and clog the surface. While the example described above discusses two membranes, the present invention can incorporate more than two membranes.

More specifically in a device 10 including more than one membrane, and referring now to FIG. 6, the device 10 may include (1) a housing 16 defining a chamber 18 therein for receiving a fluid sample 14, the fluid sample 14 comprising a fluid including an analyte 12 therein, (2) a first membrane 44 and a second membrane 46 associated with the housing 16, each of the first and second membranes having first and second sides, such that the first membrane 44 and second membrane 46 at least partially define a first region 56 proximal to the first side 48 of the first membrane 44 and distal from the second membrane 46, a second region 58 located between the second side 50 of the first membrane 44 and the first side 52 of the second membrane 46, and a third region 60 proximal to the second side 54 of the second membrane 46 and distal from the first membrane 44; and (3) a pressure generator 22 operatively connected to the housing 16 to create a pressure gradient across the first membrane 44 and the second membrane 46 such that pressure on a first side of each membrane is greater than pressure on a second side of each membrane. When the pressure generator 22 creates the pressure gradient, the fluid of the fluid sample 14 is separated into a first portion 62 of fluid in the first region 56, a second portion 64 of fluid in the second region 58, and a third portion 66 of fluid in the third region 60 - and at least one of the first portion 62 of fluid, the second portion 64 of fluid, or the third portion 66 of fluid includes the analyte 12 as an analyte-concentrated fluid sample.

In certain embodiments, the membranes may be individually configured, or may be arranged in series in a manner to concentrate a single analyte of interest, or to separate and concentrate multiple analytes. Thus, in one embodiment, the first membrane may include pores having a pore size that is larger than the size of the analyte. And the second membrane may include pores having a pore size that is smaller than the size of the analyte. In such an embodiment, a concentration of the analyte may occur upon application of pressure to the system that causes the analyte to be concentrated in fluid while separating out materials that are both larger and smaller than the analyte.

As described above, a device 10 or system with multiple (two or more) membranes may also be used to separate and concentrate multiple analytes. In such an embodiment, a fluid sample 14 may include a first analyte and a second analyte. In such an embodiment, the first membrane 44 may include pores having a pore size that is smaller than the size of the first analyte but larger than the size of the second analyte. And the second membrane may include pores having a pore size that is smaller than the size of the second analyte.

As described above, fouling of the membrane may occur during usage due to materials in the fluid caking and clogging the membrane. Ultrasonication may be used to aid in removing concentrated analyte from the membrane. An ultrasonicator may be used during the preconcentration process, after the process, or both.

Elements of the present invention may be disposable, including the membrane, the backing material and/or the waste cup. Further, the device is low cost and simple to manufacture and operate. In various embodiments, the device can include techniques/materials to allow more uniform preconcentration with time (e.g., preventing over preconcentration of the leading edge of the sample). Advantageously, embodiments of the present invention may be stored in a dry state, which extends shelf life, and regulate the amount of preconcentration.

Apart from the exemplary devices described above, another aspect of the present invention is directed to a method of increasing the concentration of an analyte within a fluid sample, the method including applying a pressure to a fluid sample, wherein the fluid sample comprises a fluid including an analyte therein. In the method, applying the pressure causes a separation of the fluid into a first portion of fluid and a second portion of fluid, wherein the second portion of fluid includes the analyte, the second portion of fluid thus being an analyte-concentrated fluid sample.

In certain embodiments, the step of applying a pressure to a fluid sample may further comprise applying a positive pressure to a fluid sample. As described above, a pressure generator may be operatively connected to the housing, and used to exert a pressure on any fluid sample present in the chamber. In one embodiment, the pressure that is applied may be a positive pressure. In an alternate embodiment, a negative pressure may be used. Applying this pressure may cause the first portion of the fluid to pass through a membrane, the membrane not being permeable to the analyte, thereby separating the first portion of the fluid from the second portion of the fluid.

The method may additionally include the step of bringing the second portion of the fluid including the analyte into contact with a sensor for detecting or measuring the analyte or detecting or measuring a characteristic of the analyte.

In one embodiment of the present invention, the pressure applied to the sample fluid at the membrane is at least about 20 psi. In another embodiment, the pressure applied to the sample fluid at the membrane is at least about 30 psi. In yet another embodiment, the pressure applied to the sample fluid at the membrane is at least about 50 psi. In yet another embodiment, the pressure applied to the sample fluid at the membrane is at least about 90 psi. In yet another embodiment, the pressure applied to the sample fluid at the membrane is at least about 100 psi. In yet another embodiment, the pressure applied to the sample fluid at the membrane is at least about 500 psi.

In an embodiment of the present invention, the pressure applied to the sample fluid at the membrane is less than about 700 psi. In another embodiment, the pressure applied to the sample fluid at the membrane is less about 500 psi. In yet another embodiment, the pressure applied to the sample fluid at the membrane is less than about 300 psi.

Due to the use of higher pressures, the preconcentration can be accomplished in a short time period. In one embodiment, the preconcentration is completed in less than 10 minutes. In another embodiment, the preconcentration is completed in less than 5 minutes. In yet another embodiment, the preconcentration is completed in less than 1 minute. In another embodiment, the preconcentration is completed in less than 30 seconds.

In various embodiments, the method of the present invention is able to provide preconcentration greater than at least one of 2X, 5X, 10X, 50X, or 100X. In other embodiments, the method is able to provide salt concentrations in the preconcentrated sample changed by less than at least one of 10X, 5X, 2X, 0.5X, 0.25X, 0.1X, or 0.05X. In an embodiment, the method is able to provide pH in the preconcentrated sample changed by less than at least one of 1000X, 100X, 10X, 2X, or 0.5X (e.g. in terms of linear concentration, not the log scale of pH).

The method may further include the step of removing analyte from the membrane. For example, and as described above, fouling of the membrane may occur during usage due to materials in the fluid (such as analyte itself) caking and clogging the membrane. Ultrasonication may be used to aid in removing concentrated analyte from the membrane. An ultrasonicator may be used during the preconcentration process, after the process, or both.

The method may further include the step of measuring the amount of increase in concentration of analyte that has occurred following applying of the pressure. In certain embodiments, measuring the amount of increase in concentration may further include determining the amount of increase of Cl ions from the fluid sample to the analyte-concentrated fluid sample. In an embodiment, the device includes at least one integrated method of measuring the amount of preconcentration that has occurred (e.g., an Ag/AgCl sensor at the inlet and outlet which measures the amount of preconcentration by the amount increase of Cl ions.

The method may further include the step of measuring the amount of increase in concentration of analyte that has occurred by measuring at least one property of the sample fluid or the waste fluid. In one embodiment, this may include measuring the amount of fluid in the first portion of fluid that has passed through the membrane, and using that measurement to calculate the amount of concentration of analyte that has occurred. Alternatively, one may measure the amount of fluid in the second portion of fluid that has not passed through the membrane, and using that measurement to calculate the amount of concentration of analyte that has occurred. A reason one may want ot measure the amount of fluid that has passed through the membrane is because some analyte will typically be lost during the process. And so, when determining the concentration of analyte that has occurred, any such calculation could incorporate a known "analyte recovery factor." In certain embodiments, this may also be programmable into a device; as a result, a user could program the device electronically or mechanically to deliver, for example, exactly 15X concentration, or for example, a final sample volume of exactly 135 μL. For the latter, it would be the case where a user knows their assay requires >100 μL, and they want as much concentration as possible, so they just concentrate the sample they have as much as they can ensuring they have enough sample volume for their assay. An equation that can be used to determine such pre-concentration is:

$$\text{Preconcentration} = \text{sample volume} / (\text{sample volume} - \text{waste chamber volume}) * \% \text{ membrane fouling}$$

In another embodiment, the device includes a method to determine the amount of fluid that has passed through the membrane. One non-limiting example is a scale to weigh the amount of fluid in a waste reservoir (or any chamber, or portion of chamber, on the far side of a membrane). Using feedback control (electronic, mechanical, etc.), the device could be configured to automatically stop applying pressure once a predetermined weight of fluid in the waste reservoir is reached.

EXAMPLES

In the lab, proof of concept was attained by using a gas tank to generate large positive pressures. A nitrogen line was attached to the test setup, and pressures ranging from 20-100 psi were applied. Extrapolating from the flow rates seen in these tests, calculations were made to determine how quickly a 3 mL fluid sample could be concentrated 20X for various fluids. If using 3 mL of sample and 300 psi, a 20X concentrated sample can be obtained in 3-4 minutes for filtered saliva, 1-2 minutes for urine, and in <10 seconds for PBS solution.

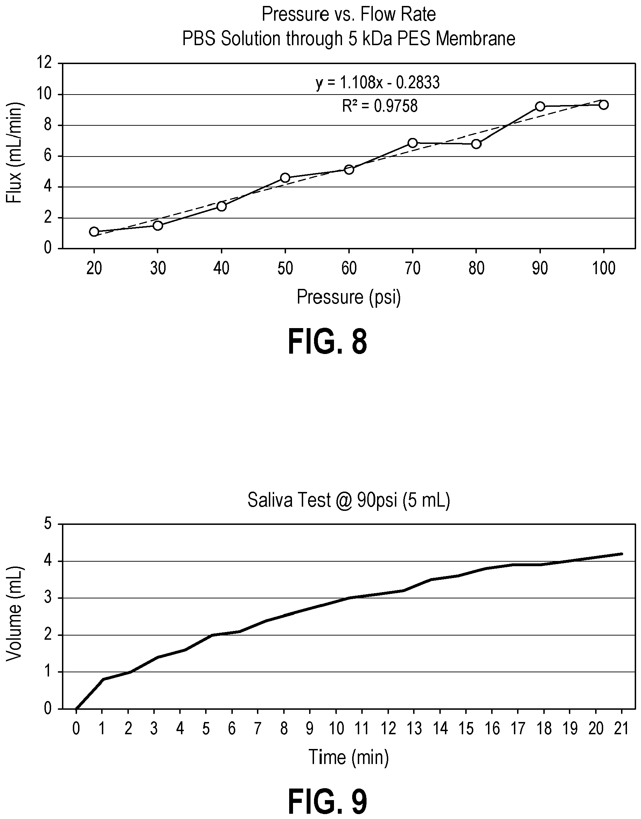

The following data was collected for samples of PBS solution. The data for Table 1 is graphically depicted in FIG. 8.

Table 1 - PBS Flux Data

| PBS Flux Data | |
| --- | --- |
| psi | flow rate (mL/min) |
| 20 | 1.1 |
| 30 | 1.5 |
| 40 | 2.75 |
| 50 | 4.6 |
| 60 | 5.13 |
| 70 | 6.87 |
| 80 | 6.8 |
| 90 | 9.23 |
| 100 | 9.33 |

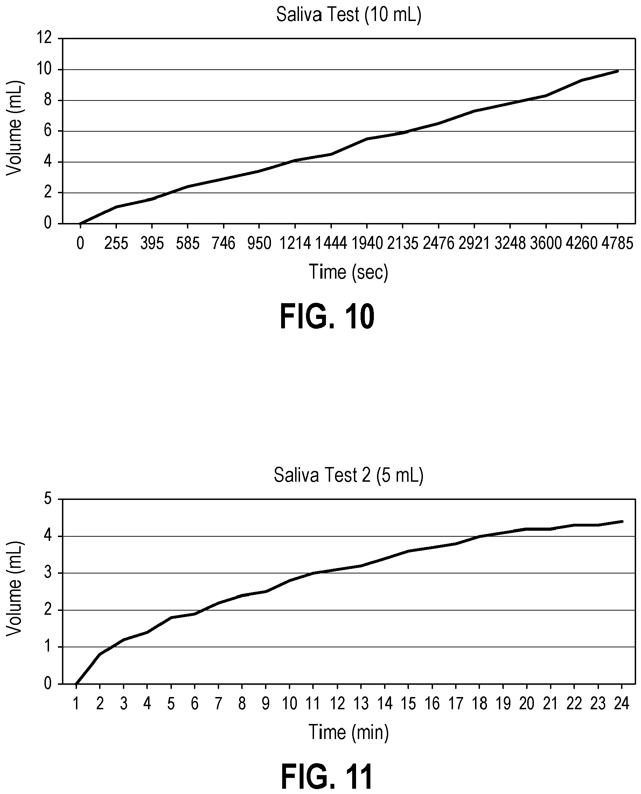

The following data was collected for saliva samples. The data for Table 2 is graphically depicted in FIG. 9. The data for Table 3 is graphically depicted in FIG. 10. The data for Table 4 is graphically depicted in FIG. 11. Each of the tests for saliva (shown in Tables 2-4, above) was run at a pressure of 90psi.

Table 2 - Saliva Flux Data (5 mL)

| Test 1 Data (5 mL) | |
| --- | --- |
| Time (min) | Vol (mL) |
| 0 | 0 |
| 2 | 0.8 |
| 3 | 1 |

(continued)

| Test 1 Data (5 mL) | |
|---|---|
| Time (min) | Vol (mL) |
| 4 | 1.4 |
| 5 | 1.6 |
| 6 | 2 |
| 7 | 2.1 |
| 8 | 2.4 |
| 9 | 2.6 |
| 10 | 2.8 |
| 11 | 3 |
| 12 | 3.1 |
| 13 | 3.2 |
| 14 | 3.5 |
| 15 | 3.6 |
| 16 | 3.8 |
| 17 | 3.9 |
| 18 | 3.9 |
| 19 | 4 |
| 20 | 4.1 |
| 21 | 4.2 |

Table 3 - Saliva Flux Data (10 mL)

| Test 1 Data (10 mL) | |
|---|---|
| Time (s) | Vol (mL) |
| 0 | 0 |
| 255 | 1.1 |
| 395 | 1.6 |
| 585 | 2.4 |
| 746 | 2.9 |
| 950 | 3.4 |
| 1214 | 4.1 |
| 1444 | 4.5 |
| 1940 | 5.5 |
| 2135 | 5.9 |
| 2476 | 6.5 |
| 2921 | 7.3 |
| 3248 | 7.8 |
| 3600 | 8.3 |

(continued)

| Test 1 Data (10 mL) | |
|---|---|
| Time (s) | Vol (mL) |
| 4260 | 9.3 |
| 4785 | 9.9 |

Table 4 - Second Saliva Test
(5mL)

| Test 2 Data (5 mL) | |
|---|---|
| Time (min) | Vol (mL) |
| 0 | 0 |
| 3 | 0.8 |
| 4 | 1.2 |
| 5 | 1.4 |
| 6 | 1.8 |
| 7 | 1.9 |
| 8 | 2.2 |
| 9 | 2.4 |
| 10 | 2.5 |
| 11 | 2.8 |
| 12 | 3 |
| 13 | 3.1 |
| 14 | 3.2 |
| 15 | 3.4 |
| 16 | 3.6 |
| 17 | 3.7 |
| 18 | 3.8 |
| 19 | 4 |
| 20 | 4.1 |
| 21 | 4.2 |
| 22 | 4.2 |
| 23 | 4.3 |
| 24 | 4.3 |
| 25 | 4.4 |

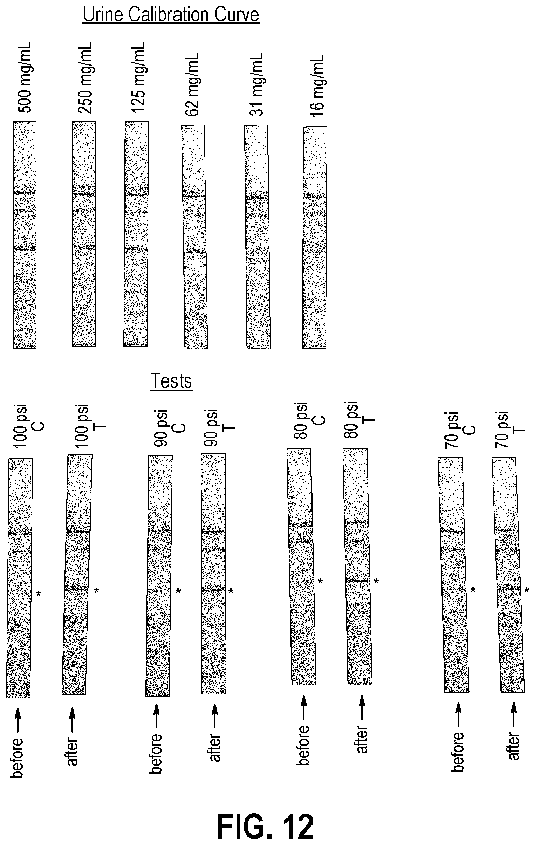

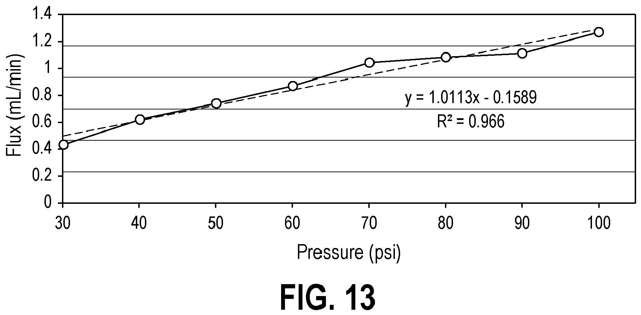

The following data was collected for urine samples. FIG. 12 depicts test strip data used to generate an LFA calibration curve and concentration test data for urine. And the data for Table 6 is graphically depicted in FIG. 13.

As can be seen in FIG. 12, six different concentrations (ranging from 16 mg/mL to 500 mg/mL) were run on an influenza LFA in order to generate a calibration curve shown at the top of FIG. 12 (i.e., one can see the darkening of bands across the LFAs as one progresses from low concentration to high concentration). Four tests were then run at four different pressures (70psi, 80psi, 90psi, and 100psi) to determine whether an increase in concentration of analyte prior to running the LFA was occurring. Each test includes two test strips (one prior to concentration in accordance with principles of the present invention, and one after concentration in accordance with principles of the present invention). Each such test strip in FIG. 12 is respectively labeled "before' or "after." As can be seen at the bands marked with an asterisk, each of the bands showed substantial darkening following pressure-driven preconcentration - thereby demonstrating that concentration of analyte within the fluid sample was occurring.

Table 5 (below) lists the urine concentration data used. The "Actual Concentration Results" in this table are listed as "at least 33X." This is because the highest concentration amount that could be seen using the influenza LFA is 33X. As described above, the calibration curve generated (and shown in FIG. 12) only goes up to 500 mg/mL. However, the test strips shown after concentration in FIG. 12 all include bands that appear darker than the calibrated band for 500 mg/mL. And so, each of these would appear to be concentrated to an amount greater than 500 mg/mL. And so, this would mean that each of these tests resulted in an actual concentration of at least 33X.

Table 5 - Urine Concentration Data

| Pressure (psi) | Start Vol. (mL) | End Vol. (mL) | Expected Concentration | Actual Concentration Results |
|---|---|---|---|---|
| 100 | 7 | 0.1 | 70X | at least 33X |
| 90 | 7 | 0.2 | 35X | at least 33X |
| 80 | 7 | 0.2 | 35X | at least 33X |
| 70 | 7 | 0.2 | 35X | at least 33X |

Table 6 - Urine Flux Data

| Pressure (psi) | Flux(mL/min) for each test | | | | | Avg flux (mL/min) |
|---|---|---|---|---|---|---|
| | Test 1 | Test 2 | Test 3 | Test 4 | Test 5 | |
| 30.00 | 0.5 | 0.44 | 0.36 | | | 0.433333333 |
| 40.00 | 0.62 | | | | | 0.62 |
| 50.00 | 0.78 | 0.75 | 0.69 | | | 0.74 |
| 60.00 | 0.94 | 0.8 | | | | 0.87 |
| 70.00 | 0.91 | 1.03 | 1.16 | 1.07 | | 1.0425 |
| 80.00 | 0.97 | 1.12 | 1.16 | | | 1.083333333 |
| 90.00 | 0.91 | 1.2 | 1.13 | 1.2 | 1.12 | 1.112 |
| 100.00 | 1.13 | 1.13 | 1.5 | 1.32 | | 1.27 |

While the present invention has been disclosed by reference to the details of preferred embodiments of the invention, it is to be understood that the disclosure is intended as an illustrative rather than in a limiting sense, as it is contemplated that modifications will readily occur to those skilled in the art, within the spirit of the invention and the scope of the amended claims.

Embodiments of the invention can be described with reference to the following numbered clauses, with preferred features laid out in the dependent clauses:

1. A device for increasing the concentration of an analyte in a fluid sample, the device comprising:

a housing defining a chamber therein for receiving a fluid sample, said fluid sample comprising a fluid including an analyte therein;

a membrane associated with said housing; and

a pressure generator operatively connected to said housing to create a pressure gradient across said membrane such that pressure on a first side of said membrane is greater than pressure on a second side of said membrane;

wherein when said pressure generator creates said pressure gradient, said fluid of said fluid sample is separated into a first portion of fluid on one side of said membrane, and a second portion of fluid including said analyte on an opposite side of said membrane, said second portion of fluid being an analyte-concentrated fluid sample.

2. The device of clause 1, wherein said pressure generator is adapted to exert a positive pressure within said chamber.

3. The device of clause 1, wherein said pressure generator is chosen from a pump, a syringe, a gas canister, a gas tank, a mechanical lever, and a chemical pack.

4. The device of clause 1, wherein said pressure generator is capable of generating a positive pressure within the chamber and on said fluid sample chosen from at least 20psi, at least 30psi, at least 50psi, at least 90psi, at least 100psi, and at least 500psi.

5. The device of clause 1, wherein said analyte-concentrated fluid sample is concentrated to a degree chosen from greater than 2X, greater than 5X, greater than 10X, greater than 30X, greater than 50X, and greater than 100X.

6. The device of clause 5, wherein the fluid is saliva, and the concentration occurs in less than 3 minutes

7. The device of clause 6, wherein the saliva is in an amount of 3mL, and is subjected to a pressure of 500psi.

8. The device of clause 5, wherein the fluid is urine, and the concentration occurs in less than 5 minutes.

9. The device of clause 8, wherein the urine is in an amount of 5mL, and is subjected to a pressure of 100psi.

10. The device of clause 1, wherein said membrane is configured to prevent passage of said analyte through said membrane.

11. The device of clause 10, wherein said membrane includes pores having a pore size that is smaller than the size of said analyte.

12. The device of clause 1, further comprising a backing material positioned proximal to said membrane to support said membrane.

13. The device of clause 12, wherein said backing material is chosen from a steel mesh, a nylon mesh, and a metal plate.

14. The device of clause 12, wherein said backing membrane is integrated with the membrane and is removable.

15. The device of clause 12, wherein said backing membrane is reusable.

16. The device of clause 1, wherein said membrane has a non-planar shape.

17. The device of clause 16, wherein said non-planar shape is chosen from fully conical, partially conical, fully triangular, or partially triangular.

18. The device of clause 12, wherein said membrane and said backing material each have a non-planar shape.

19. The device of clause 16, wherein at least a portion of said membrane is occluded.

20. The device of clause 19, wherein a material used to occlude at least a portion of said membrane is chosen from wax and plastic.

21. The device of clause 19, wherein the occluded portion of the membrane has a geometry that defines a volume that determines the final volume of the second portion of fluid.

22. The device of clause 19, wherein the non-occluded portion of the membrane remains in contact with the first portion of fluid until the first portion of fluid reaches at least less than 20% of its initial volume for the first portion of fluid.

23. The device of clause 1, further comprising a first gating component positioned proximal to a first end of said housing, said first gating component having an open position and a closed position, and wherein said first gating component prevents fluid from entering said chamber of said housing while in said closed position.

24. The device of clause 23, further comprising a second gating component positioned proximal to a second end of said housing, said second gating component having an open position and a closed position, and wherein said second gating component prevents fluid from exiting said chamber of said housing while in said closed position.

25. The device of clause 1, further comprising a sensor adapted to detect said analyte, or measure said analyte, or detect a characteristic of said analyte, or measure a characteristic of said analyte.

26. The device of clause 25, wherein said analyte-concentrated fluid sample is in communication with said sensor.

27. A device for increasing the concentration of an analyte in a fluid sample, the device comprising:

a housing defining a chamber therein for receiving a fluid sample, said fluid sample comprising a fluid including an analyte therein;

a first membrane and a second membrane associated with said housing, each of said first and second membranes having first and second sides, such that said first membrane and second membrane at least partially define

a first region proximal to the first side of the first membrane and distal from the second membrane,

a second region located between the second side of the first membrane and the first side of the second membrane, and

a third region proximal to the second side of the second membrane and distal from the first membrane; and

a pressure generator operatively connected to said housing to create a pressure gradient across said first membrane and said second membrane such that pressure on a first side of said membrane is greater than pressure on a second side of said membrane;

wherein when said pressure generator creates said pressure gradient, said fluid of said fluid sample is separated into a first portion of fluid in the first region, a second portion of fluid in said second region, and a third portion of fluid in said third region,

wherein at least one of said first portion of fluid, said second portion of fluid, or said third portion of fluid includes said analyte as an analyte-concentrated fluid sample.

28. The device of clause 27, wherein said first membrane includes pores having a pore size that is larger than the size of said analyte.

29. The device of clause 28, wherein said second membrane includes pores having a pore size that is smaller than the size of said analyte.

30. The device of clause 27, wherein at least one of said first membrane and said second membrane has a non-planar shape.

31. The device of clause 27, wherein the analyte is a first analyte, and the fluid sample further comprises a second analyte.

32. The device of clause 31, wherein said first membrane includes pores having a pore size that is smaller than the size of the first analyte but larger than the size of the second analyte, and wherein said second membrane includes pores having a pore size that is smaller than the size of said second analyte.

33. The device of clause 27, wherein at least a portion of said membrane is occluded, and wherein the occluded portion of the membrane has a geometry that defines a volume that determines the final volume of the second portion of fluid.

34. A method of increasing the concentration of an analyte within a fluid sample, the method comprising:

applying a pressure to a fluid sample, said fluid sample comprising a fluid including an analyte therein;

wherein applying said pressure causes a separation of said fluid into a first portion of fluid and a second portion of fluid, wherein the second portion of fluid includes said analyte, said second portion of fluid thus being an analyte-concentrated fluid sample.

35. The method of clause 34, wherein applying a pressure to a fluid sample further comprises applying a positive pressure to a fluid sample.

36. The method of clause 34, wherein applying said pressure causes said first portion of said fluid to pass through a membrane, said membrane not being permeable to said analyte, thereby separating said first portion of said fluid from said second portion of said fluid.

37. The method of clause 36, further comprising bringing said second portion of said fluid including said analyte into contact with a sensor for detecting or measuring said analyte or detecting or measuring a characteristic of said analyte.

38. The method of clause 34, wherein applying said pressure further comprises applying said pressure in an amount chosen from at least 20psi, at least 30psi, at least 50psi, at least 90psi, at least 100psi, and at least 500psi.

39. The method of clause 34, wherein applying said pressure further comprises applying said pressure in an amount chosen from less than 700psi, less than 500psi, and less than 300psi.

40. The method of clause 34, wherein separation of said fluid into said first portion of fluid and said second portion of fluid occurs in a time period chosen from less than 10 minutes, less than 5 minutes, less than 1 minute, and less than 30 seconds.

41. The method of clause 36, further comprising removing analyte from said membrane.

42. The method of clause 41, wherein removing analyte from said membrane is accomplished via ultrasonication.

43. The method of clause 34, further comprising determining the amount of increase in concentration of analyte that has occurred following applying of said pressure.

44. The method of clause 43, wherein determining the amount of increase in concentration further comprises determining the amount of increase of Cl ions from said fluid sample to said analyte-concentrated fluid sample.

45. The method of clause 43, wherein determining the amount of increase in concentration further comprises measuring the amount of fluid in said first portion of fluid, and using that measurement to calculate the amount of concentration of analyte that has occurred.

46. The method of clause 43, wherein determining the amount of increase in concentration further comprises measuring the amount of fluid in said second portion of fluid, and using that measurement to calculate the amount of concentration of analyte that has occurred.

**Claims**

1.  A method of increasing the concentration of an analyte within a fluid sample, the method comprising:

    applying a pressure to a fluid sample, said fluid sample comprising a fluid including an analyte therein;
    wherein applying said pressure causes a separation of said fluid into a first portion of fluid and a second portion of fluid, wherein the second portion of fluid includes said analyte, said second portion of fluid thus being an analyte-concentrated fluid sample.

2.  The method of claim 1, wherein applying a pressure to a fluid sample further comprises applying a positive pressure to a fluid sample.

3. The method of claim 1, wherein applying said pressure causes said first portion of said fluid to pass through a membrane, said membrane not being permeable to said analyte, thereby separating said first portion of said fluid from said second portion of said fluid.

4. The method of claim 3, further comprising bringing said second portion of said fluid including said analyte into contact with a sensor for detecting or measuring said analyte or detecting or measuring a characteristic of said analyte.

5. The method of claim 1, wherein applying said pressure further comprises applying said pressure in an amount chosen from at least 20psi, at least 30psi, at least 50psi, at least 90psi, at least 100psi, and at least 500psi.

6. The method of claim 1, wherein applying said pressure further comprises applying said pressure in an amount chosen from less than 700psi, less than 500psi, and less than 300psi.

7. The method of claim 1, wherein separation of said fluid into said first portion of fluid and said second portion of fluid occurs in a time period chosen from less than 10 minutes, less than 5 minutes, less than 1 minute, and less than 30 seconds.

8. The method of claim 3, further comprising removing analyte from said membrane.

9. The method of claim 8, wherein removing analyte from said membrane is accomplished via ultrasonication.

10. The method of claim 1, further comprising determining the amount of increase in concentration of analyte that has occurred following applying of said pressure.

11. The method of claim 10, wherein determining the amount of increase in concentration further comprises determining the amount of increase of Cl ions from said fluid sample to said analyte-concentrated fluid sample.

12. The method of claim 10, wherein determining the amount of increase in concentration further comprises measuring the amount of fluid in said first portion of fluid, and using that measurement to calculate the amount of concentration of analyte that has occurred.

13. The method of claim 10, wherein determining the amount of increase in concentration further comprises measuring the amount of fluid in said second portion of fluid, and using that measurement to calculate the amount of concentration of analyte that has occurred.

**FIG. 1**

**FIG. 2A**

FIG. 2B

PRESSURE GENERATOR

FIG. 3

**FIG. 4A**

**FIG. 4B**

**FIG. 4C**

**FIG. 4D**

FIG. 5

FIG. 6

FIG. 7

Pressure vs. Flow Rate
PBS Solution through 5 kDa PES Membrane

$$y = 1.108x - 0.2833$$
$$R^2 = 0.9758$$

## FIG. 8

Saliva Test @ 90psi (5 mL)

## FIG. 9

Saliva Test (10 mL)

**FIG. 10**

Saliva Test 2 (5 mL)

**FIG. 11**

FIG. 12

y = 1.0113x - 0.1589
R² = 0.966

FIG. 13

Europäisches
Patentamt

European
Patent Office

Office européen
des brevets

# EUROPEAN SEARCH REPORT

Application Number

**EP 23 16 6379**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/126682 A1 (UNIV CINCINNATI [US]) 27 June 2019 (2019-06-27) * paragraphs [0003], [0004], [0052] – [0055], [0060], [0071], [0072]; figures 1-6 * | 1-13 | INV. B01L3/00 B01D63/08 |
| X | US 2018/289296 A1 (HEIKENFELD JASON [US] ET AL) 11 October 2018 (2018-10-11) * paragraph [0068]; figure 12b * | 1-13 | |

TECHNICAL FIELDS
SEARCHED      (IPC)

B01D
B01L

The present search report has been drawn up for all claims

| Place of search | Date of completion of the search | Examiner |
|---|---|---|
| Munich | 9 November 2023 | Hennebrüder, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 16 6379

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| WO 2019126682 | A1 | 27-06-2019 | US | 2021162412 A1 | 03-06-2021 |
| | | | WO | 2019126682 A1 | 27-06-2019 |
| US 2018289296 | A1 | 11-10-2018 | CN | 108697322 A | 23-10-2018 |
| | | | EP | 3364862 A1 | 29-08-2018 |
| | | | US | 2018289296 A1 | 11-10-2018 |
| | | | US | 2018317833 A1 | 08-11-2018 |
| | | | US | 2020093417 A1 | 26-03-2020 |
| | | | WO | 2017070640 A1 | 27-04-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62937318